# EUROPÄISCHE PATENTSCHRIFT

(11) **EP 2 030 918 B1**
(45) Veröffentlichungstag und Bekanntmachung des Hinweises auf die Patenterteilung: **21.04.2010**
(21) Anmeldenummer: 08163044.4
(22) Anmeldetag: 27.08.2008
(51) Int. Cl.: B65G 17/34

(54) **Querbandsorter und Verfahren zum Transportieren und Sortieren von Stückgut**
Cross conveyor sorter and method for transporting and sorting articles
Dispositif de triage à bande transversale et procédé pour le transport et triage d'articles

(30) Priorität: 29.08.2007 DE 102007040859
(43) Veröffentlichungstag der Anmeldung: 04.03.2009
(73) Patentinhaber: Siemens Aktiengesellschaft, 80333 München (DE)
(72) Erfinder: Syndikus, Andreas, 90559, Burgthann (DE)

(56) Entgegenhaltungen:
- JP-A- 6 191 635
- JP-A- 2006 044 818

## Beschreibung

Die Erfindung betrifft einen Querbandsorter zum Transportieren und Sortieren von Stückgut nach dem Oberbegriff des Anspruchs 1.

Aus der Stückgutfördertechnik, insbesondere der Sortiertechnik, sind die sogenannten Querbandsorter bekannt, die aus auf einer Förderanlage bewegbaren Fahrzeugen bestehen, von denen zumeist mehrere zu einem Zug oder zu einer endlos umlaufenden Wagenkette zusammengefügt sind. Die einzelnen Fahrzeuge sind mit Traggurten versehen, die quer zur Transportrichtung der Fahrzeuge umlaufend antreibbar sind. Auf diesem, auch als Querband oder Crossbelt bezeichneten Traggurt wird das Stückgut bei ruhendem Querband in Längsrichtung des Förderers transportiert; zum Sortieren an der gewünschten Entladestelle wird das Stückgut durch gesteuertes Antreiben des Querbandes quer zur Transportrichtung des Querbandförderers seitlich ausgefördert.

Um den beschriebenen Ausschleusvorgang zu aktivieren, muss auf jedem Wagen der bewegten Wagenkette des Querbandsorters ein Antrieb für das Querband vorgesehen sein, der zumindest an der Ent- und/oder Beladestelle aktivierbar ist.

Zu diesem Zweck sind verschiedene Antriebe bekannt. Sehr verbreitet ist es, den Antrieb mit auf jedem Wagen mitgeführten Elektromotoren zu realisieren, die ihre Energie über entlang der Förderbahn verlegte Schleifleitungen oder induktiv abgreifen (EP 0 990 604 A1).

Es ist auch bekannt, den Vortrieb der Wagenkette selbst zur Aktivierung der Ausschleusung zu nutzen. Dabei wird z.B. eine schaltbare Kulisse an ein Reibrad geprellt, über das beim Vorbeifahren der Wagenkette an der Entladestelle der Ausschleusvorgang initiiert wird (DE 198 01 706 A1).

Ein Elektromotor zum Aktivieren des Antriebs für das Querband muss in der Lage sein, Stückgut bis zu einem Gewicht von 50 kg mit einer Beschleunigung von bis zu 3m/s²auszuschleusen. Die dazu benötigte Energie muss über Schleifleitungen oder berührungslos auf die bewegte Wagenkette übertragen werden; zusätzlich muss auch die Information, wann das jeweilige Querband bewegt werden soll, der bewegten Wagenkette übermittelt werden. Es bedarf deshalb eines erheblichen Aufwandes, der die Einrichtung deutlich verteuert und störanfällig macht.

Im Fall der mechanischen Aktivierung des Querbandes hat sich gezeigt, dass das Wirkprinzip nur bis zu einer Geschwindigkeit von 1,6 m/s zuverlässig funktioniert; denn die durch das Reibrad induzierte ruckhafte Beschleunigung des Querbandes wirkt sich, besonders bei leichten Sendungen, negativ auf das Ausschleusverhalten aus. Sortergeschwindigkeiten bis zu 2,5m/s mussten aus diesem Grund bisher mit elektrischem Antrieb realisiert werden.

Ein gattungsgemäßer Querbandsorter mit den Merkmalen des Oberbegriffs des Anspruchs 1 ist aus der JP 06 191635 A (Sandvik KK) bekannt. Dort ist ein konventionelles Getriebe vorgesehen, dessen Antriebswelle permanent mit dem Antrieb in Verbindung steht, der seinerseits über eine zu- und abschaltbare Kupplung die Umlenkrolle für den Quergurt antreibt. Der Antrieb ist sehr aufwändig und baut wenig platzsparend.

Ausgehend von den beschriebenen Problemen und Nachteilen des Standes der Technik liegt der vorliegenden Erfindung die Aufgabe zu Grunde, einen gattungsgemäßen Querbandsorter mit einem einfachen und preiswerten Antrieb des Querbandes auszustatten, der platzsparend und kompakt in die Umlenkrolle integriert werden kann und der am gewünschten Entladeort eine ausreichend große Kraft zum schonenden Ausschleusen auch von schweren Gegenständen bei hoher Ausschleusgeschwindigkeit erzeugt kann.

Zur Lösung der Aufgabe wird erfindungsgemäß ein gattungsgemäßer Querbandsorter mit mechanischem Antrieb dadurch verbessert, dass das Getriebe ein innerhalb der hohlen Umlenkrolle angeordnetes schaltbares Planetengetriebe ist, dessen Planetenkranz der Planetenräder mit einer Hohlwelle fest verbunden ist, die zentrisch im Inneren der Umlenkrolle die Antriebswelle des Antriebs koaxial umgreift und auf dieser drehbar gelagert ist.

Der Vortrieb des Sorters wird, zunächst wie beim Stand der Technik, genutzt, um den notwendigen Antrieb des Querbandes für die Ausschleusbewegung zu realisieren. Dazu wird die Antriebskraft beispielsweise dadurch erzeugt, dass mindestens ein an jedem Wagen des Querbandsförderers befestigtes Reibrad beim Vortrieb des Wagens am Sorterrahmen abrollt, das seine Rotation über eine Welle und ein zuschaltbares Planetengetriebe im richtigen Moment auf die Umlenkrolle leitet. Eine kompakte raumsparende Anordnung erzielt die Erfindung dadurch, dass das schaltbare Planetengetriebe innerhalb der hohlen Umlenkrolle angeordnet ist. Planetengetriebe eignen sich besonders zum Einbau in die Umlenkrolle, sie sind bei höherer Stückzahl auch preiswerter als die bekannten Elektromotoren an jeder Umlenkrolle, zumal das Problem der Stromzuführung und der Datenübermittlung an die bewegte Wagenkette entfällt. Die koaxial zur Umlenkrolle angetriebene Antriebswelle steht wirkmäßig permanent im Eingriff mit dem Reibrad am Rahmen des Querbandsorters, gibt aber die Rotation an die Umlenkrolle nur weiter, wenn das Getriebe zwischen Umlenkrolle und Antriebwelle geschaltet ist. Ohne Zuschaltung des Getriebes drehen sich die Hohlwelle und der Planetenkranz mit den darin gelagerten Planetenrädern um die Antriebswelle, ohne die Drehbewegung auf die Umlenkrolle zu übertragen. Dies wird erst ermöglicht, wenn die Hohlwelle fest gehalten wird, so dass die von dem Sonnenrad angetriebenen Planetenräder die Antriebskraft auf das Hohlrad im Inneren der Umlenkrolle weiterleiten.

Besonders vorteilhaft ist es, wenn nach einem weiteren Merkmal der Erfindung das Getriebe berührungslos schaltbar ist. Durch diesen Vorschlag entfallen aufwändige mechanische Schaltelemente oder elektrische Zuleitungen, was insbesondere dann von Vorteil ist, weil das Getriebe erfindungsgemäß innerhalb der Umlenkrolle angeordnet ist.

In einer bevorzugten Ausgestaltung der Erfindung ist das Sonnenrad des Planetengetriebes auf der zur Umlenkrolle koaxialen, mit dem Antrieb verbundenen Antriebswelle angeordnet; die in dem frei drehbaren Planetenkranz gelagerten Planetenräder kämmen einerseits mit dem Sonnenrad und andererseits mit dem Hohlrad des Planetengetriebes, welches am Innenumfang der Umlenkrollen befestigt ist. Auf diese Weise wird ein besonders kompakter und funktioneller Antrieb geschaffen, der leicht herstellbar und einfach montierbar ist.

Um das Getriebe schaltbar zu gestalten, ist erfindungsgemäß der Planetenkranz der Planetenräder von außerhalb der Umlenkrolle steuerbar und vorübergehend festsetzbar. Um die Funktionalität der Schaltbarkeit des Planetengetriebes zu gewährleisten, ist die zeitweise Festsetzbarkeit des Planetenkranzes wichtig. Wird nämlich der Planetenkranz festgesetzt, so werden die Planetenräder durch das Sonnenrad, das seinerseits mit dem Reibantrieb am Sorterrahmen im stetigen Eingriff steht, infolge der Fortbewegung der Wagen in Rotation versetzt. Da die Planetenräder gleichzeitig mit dem im Inneren der Umlenkrolle angeordneten Hohlrad kämmen, wird dieses angetrieben. Über das Hohlrad, das mit der Umlenkrolle verbunden ist, wird das auf der Umlenkrolle aufliegende Querband in Drehrichtung der Umlenkrolle angetrieben, aufliegende Gegenstände werden quer zur Transportrichtung des Querbandförderers ausgeschleust.

Eine besonders günstige Anordnung ergibt sich, wenn nach einem Merkmal der Erfindung die Hohlwelle mit mindestens einem auf ihrem Umfang befestigtem Permanentmagnet versehen ist, der im Wirkbereich eines außerhalb der Umlenkrolle vorgesehenen Elektromagneten liegt und beim Einschalten des Magnetfeldes ein Festhalten der Hohlwelle und damit des Planetenkranzes bewirkt. Die Planetenräder setzen dadurch das Hohlrad und damit gleichzeitig die Umlenkrolle mit dem aufliegenden Querband in Bewegung. Das Anhalten der Hohlwelle und damit das Schalten des Getriebes erfolgt auf diese Weise berührungslos und einfach von außerhalb der Umlenkrolle durch Schalten des Elektromagneten.

Günstigerweise ist nach einem ausgestalteten Merkmal der Erfindung die Stärke des Magnetfeldes veränderbar. Durch die Einstellung des Magnetfeldes wird ein sanftes Abbremsen und Beschleunigen des Querbandes und damit ein sanfter Ein- und Ausschleusvorgang auch bei ansonsten hohen Transportgeschwindigkeiten ermöglicht.

Um ein Be- und Entladen des Querbandförderers nach beiden Seiten des Förderers zu verwirklichen, soll das Querband reversierbar sein. Das erreicht die Erfindung dadurch, dass jeder der beiden Umlenkrollen ein erfindungsgemäßes Getriebe zugeordnet ist, das in jeweils umgekehrtem Drehsinn antreibbar ist.

Das erfindungsgemäße Verfahren zum Antrieb eines vorgenannten Querbandsorters zum Transportieren und Sortieren von Gegenständen sieht vor, dass zum Be- oder Entladen des Querbandsorters die mit dem Antrieb permanent im Eingriff stehende Antriebswelle, von außen geschaltet, zeitweise mit der Umlenkrolle verbunden wird und dadurch das Querband in der Drehrichtung der Umlenkrolle in Bewegung setzbar ist.

Das auf der Antriebswelle angeordnete und von dieser stetig angetriebene Sonnenrad bewirkt somit bei festgehaltenem Planetenkranz über die mit dem Sonnenrad und dem Hohlrad kämmenden Planetenräder eine Drehung des Hohlrades, welches im Inneren der Umlenkrolle befestigt ist und damit der Umlenkrolle. Dadurch wird zwangsweise das auf der Umlenkrolle aufliegende Querband in Bewegung versetzt. Sobald der Planetenkranz durch Abschalten des Elektromagneten wieder los gelassen wird, rotiert der dieser mit der Hohlwelle um das Sonnenrad bzw. die Antriebswelle, wobei die gleichzeitig mit dem Sonnenrad und dem Hohlrad kämmenden Planetenräder keine Antriebskraft mehr auf das Hohlrad und die Umlenkrolle leiten und das aufliegende Querband zum Stillstand kommt.

Das erfindungsgemäße Antriebsprinzip weist gegenüber der bisher verwendeten Technik deutliche Vorteile auf. Die für den Ausschleusprozess geforderte Leistung steht aufgrund der Sortergeschwindigkeit ausreichend zur Verfügung. Das berührungslose Wirkprinzip für die Aktivierung der Ausschleusung stellt keine einschränkenden Anforderungen an die Sortergeschwindigkeit. Durch eine Veränderung der Stärke des Magnetfeldes lässt sich auch bei hohen Geschwindigkeiten eine annähernd gleichförmige Beschleunigung beim Ausschleusvorgang realisieren.

Ein Ausführungsbeispiel der Erfindung ist in der Zeichnung dargestellt und wird nachfolgend beschrieben.

Es zeigen:
- Figur 1: in grob vereinfachter Darstellung den Wagen ei- nes Querbandförderers nach der Erfindung und
- Figur 2: eine vergrößerte Darstellung des Antriebprinzips des Querbandes.

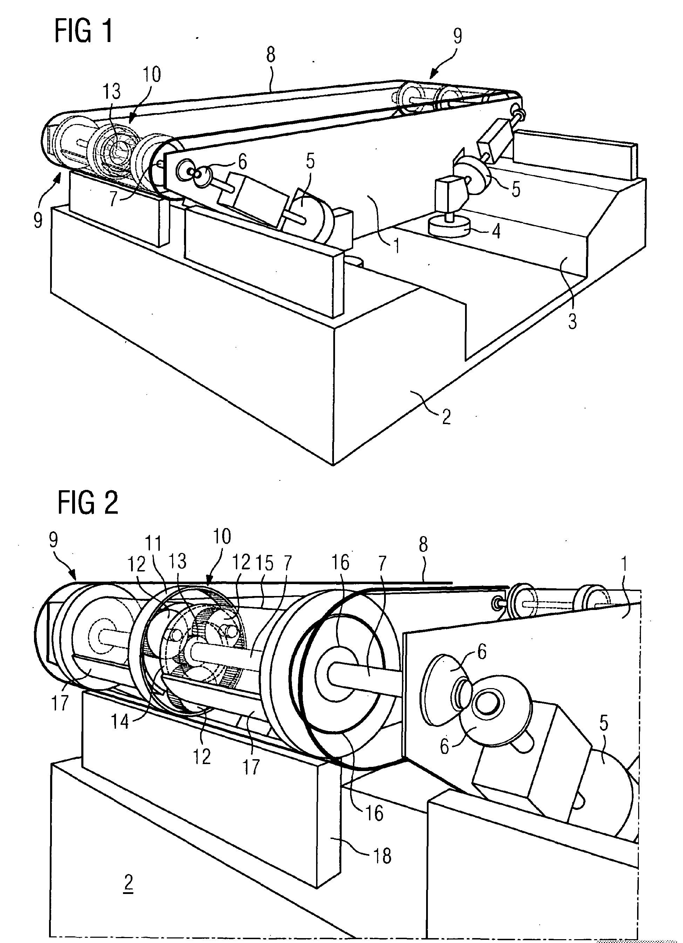

In Figur 1 ist mit 1 einer von mehreren Wagen eines Querbandförderers bezeichnet, der auf dem Rahmen 2 des in einer endlosen Schleife geführten Querbandförderers in Pfeilrichtung angetrieben verfahrbar ist. Der Antrieb des Querbandförderers kann dabei beliebig sein. Die einzelnen Wagen 1 des Querbandförderers können miteinander zu einer Wagenkette oder zu einem Zug gekoppelt sein oder laufen individuell in Transportrichtung um. Auf jedem Wagen 1 sind beidseitig der Längsachse des Querförderers und in Transportrichtung ausgerichtet Umlenkrollen 9 gelagert, um die ein endloses Querband 8 in der Art eines Förderbandes geschlungen ist. Die Umlenkrollen sind 9 antreibbar, und zwar abgeleitet von der Transportbewegung des Querbandförderers. Zu diesem Zweck sind am Wagen 1 Reibräder 4, 5 gelagert, die an längs des Transportweges des Querbandförderers verlaufenden Reibflächen 3 anliegen und beim Transport der Wagen, dort abrollend, ihre Drehbewegung über eine Antriebswelle auf ein Kegelradgetriebe 6 leiten, welches die Antriebskraft auf die Antriebswelle 7 für das Querband umleitet.

Die Antriebswelle 7 verläuft koaxial in der Umlenkrolle 9 und trägt mittig der Umlenkrolle das Sonnenrad 13 eines Planetengetriebes, welches insgesamt im Inneren der Umlenkrolle 9 angeordnet ist.

In Figur 2 ist in vergrößerter Darstellung der Antrieb der Umlenkrolle 9 dargestellt. Erkennbar ist das Hohlrad 11 des Planetengetriebes 10 an der Innenseite der Umlenkrolle 9 koaxial zu dieser und an dieser befestigt und ist über die drei Planetenräder 12, die mit dem Sonnerad 13 kämmen, antreibbar.

Die Planetenräder 12 sind in dem Planetenkranz 14 gelagert, der stirnseitiger Teil einer Hohlwelle 15 ist, welche die Antriebswelle 7 koaxial umgreift und auf dieser bzw. in der Umlenkrolle bei 16 drehbar gelagert ist. Auf der Hohlwelle 15 sind, vorzugsweise am Innenumfang, Permanentmagnete 17 angeordnet, die mit einem Elektromagneten 18 korrespondieren, sobald dieser eingeschaltet ist. Der Elektromagnet 18 ist am Rahmen 2 des Querbandförderers befestigt, und zwar derart, dass bei eingeschaltetem Magnetfeld der Elektromagnet 18 den Permanentmagneten 17 der Hohlwelle 15 in der Weise beeinflusst, dass die Hohlwelle 15 an ihrer Drehung um die Antriebswelle gehindert wird.

### Dadurch ergibt sich folgende Wirkung:

Bei der Fortbewegung des Wagens 1 in Transportrichtung entlang des Rahmens 2 des Querförderers werden die Reibräder 4, 5 an der mindestens im Bereich der Be- und Entladestellen vorgesehenen Reibfläche 3 in Drehung versetzt und übertragen über Antriebswellen ein Drehmoment, das über das Kegelradgetriebe 6 auf die Antriebswelle 7 umgelenkt wird, die während der gesamten Fortbewegung des Wagens 1 im Bereich der Reibfläche 3 angetrieben wird. Mit der Antriebswelle 7 dreht auch das auf der Antriebswelle fest angeordnete Sonnenrad 13, das wiederum die Planetenräder 12 und über diese den Planetenkranz 14, in dem die Planetenräder gelagert sind, in Drehung versetzt. Gleichzeitig rollen die Planetenräder 12 am Innenumfang des verzahnten Hohlrades 11 in dessen Umfangsrichtung ab. Das Hohlrad 11 steht dabei still, solange sich der Planetenkranz 14 um die Systemachse des Planetengetriebes drehen kann. Das Stillstehen des Hohlrades 11 bedeutet gleichzeitig auch ein Stillstehen der Umlenkrolle 9 und damit des Querbandes 8 mit dem darauf aufliegenden Gegenstand, so dass dieser in Transportrichtung fortbewegt werden kann.

Erst durch das Festhalten des Planetenkranzes 14, veranlasst durch das Einschalten des Elektromagneten 18, dessen Magnetfeld den Permanentmagneten in der Hohlwelle 15 anhält, wird über die mit dem Sonnenrad 10 kämmenden Planetenräder 12 das Hohlrad 11 drehangetrieben. Mit dem Hohlrad 11 bewegt sich die Umlenkrolle 9 und damit auch das Querband, das die Umlenkrollen 9 des Wagens 1 umschlingt, quer zur Transportrichtung des Querbaridförderers und ermöglicht so ein Be- oder Entladen des Wagens.

## Patentansprüche

1. Querbandsorter zum Transportieren und Sortieren von Stückgut, bestehend aus einer Vielzahl auf einer endlosen Förderbahn zu einem Zug gekoppelter oder individuell verfahrbarer Wagen (1), die ihrerseits jeweils mit einem endlos um Umlenkrollen (9) umlaufenden, quer zur Transportrichtung der Wagen antreibbaren Quergurt (8) versehen sind, auf dem die Gegenstände aufliegend transportierbar und an festgelegten Be- und/oder Entladestellen be- und/oder entladbar sind, wozu mindestens eine Umlenkrolle (9) des Quergurtes mit einem Antrieb korrespondiert, dessen Antriebskraft von der Längbewegung des Querbandsorters abgeleitet wird,
wozu zwischen dem Antrieb (7) des Quergurtes (8) und der Umlenkrolle (9) ein schaltbares Getriebe (10) vorgesehen ist, dessen Antriebswelle permanent mit dem Antrieb im Eingriff steht und das die Umlenkrolle (9) zu- und abschaltbar mit dem Antrieb (7) verbindet,
**dadurch gekennzeichnet, dass**
das Getriebe (10) ein innerhalb der hohlen Umlenkrolle (9) angeordnetes schaltbares Planetengetriebe ist, dessen Planetenkranz (14) der Planetenräder (12) mit einer Hohlwelle (15) fest verbunden ist, die zentrisch im Inneren der Umlenkrolle (9) die Antriebswelle des Antriebs (7) koaxial umgreift und auf dieser drehbar (16) gelagert ist.

2. Querbandsorter nach Anspruch 1,
**dadurch gekennzeichnet, dass** das Getriebe (10) berührungslos schaltbar ist.

3. Querbandsorter nach Anspruch 1 und 2,
**dadurch gekennzeichnet, dass**
das Sonnenrad (13) des Planetengetriebes (10) auf der zur Umlenkrolle (9) koaxialen, mit dem Antrieb verbundenen Antriebswelle (7) angeordnet ist und die in einem antriebslosen Planetenkranz (14) gelagerten Planetenräder (12) einerseits mit dem Sonnenrad (13) und andererseits mit dem Hohlrad (11) des Planetengetriebes (10) kämmen, das am Innenumfang der Umlenkrolle (9) befestigt ist.

4. Querbandsorter nach Anspruch 1 bis 3,
**dadurch gekennzeichnet, dass**
der Planetenkranz (14) der Planetenräder (12), von außerhalb der Umlenkrolle (9) gesteuert, vorübergehend festsetzbar ist.

5. Querbandsorter nach einem der Ansprüche 1 bis 4, **dadurch gekennzeichnet, dass**
die Hohlwelle (15) mit mindestens einem auf ihren Umfang befestigten Permanentmagneten (17) versehen ist, der im Wirkbereich eines außerhalb der Umlenkrolle (9) vorgesehenen Elektromagneten (18) liegt und beim Einschalten des Magnetfeldes ein Festhalten der Hohlwelle (15) mit dem Planetenkranz (14) und ein gleichzeitiges Drehen des Hohlrades (11) mit der Umlenkrolle (9) bewirkt.

6. Querbandsorter nach Anspruch 5,
**dadurch gekennzeichnet, dass**
die Stärke des Magnetfeldes veränderbar ist.

7. Querbandsorter nach einem der Ansprüche 1 bis 6,
**dadurch gekennzeichnet, dass**
jeder der beiden Umlenkrollen (9) ein Getriebe (10) zugeordnet ist, das im jeweils umgekehrten Drehsinn antreibbar ist.

8. Verfahren zum Antrieb eines Querbandsorters mit den Merkmalen eines der Ansprüche 1 bis 7,
**dadurch gekennzeichnet, dass**
zum Be- oder Entladen des Querbandsorters die mit dem Antrieb im Eingriff stehende, das Sonnenrad (13) des Planetengetriebes tragende Antriebswelle (7) von außen geschaltet zeitweise über die Planetenräder (12) und das Hohlrad mit der Umlenkrolle verbunden und **dadurch** der Quergurt in der Drehrichtung der Umlenkrolle in Bewegung gesetzt wird.

## Claims

1. Cross belt sorter for transporting and sorting piece goods, composed of a plurality of carriages (1) which are coupled on a continuous conveyor track to form a train or can be moved individually and which are themselves each provided with a cross belt (8) which circulates continuously around deflection rollers (9) and can be driven transversely with respect to the direction of transportation of the carriages, and on which the objects can be transported in a resting position and loaded and/or unloaded at fixed loading and/or unloading locations, for which purpose at least one deflection roller (9) of the cross belt corresponds to a drive whose drive force is derived from the longitudinal movement of the cross belt sorter, for which purpose a shiftable transmission (10) is provided between the drive (7) of the cross belt (8) and the deflection roller (9), the drive shaft of said transmission (10) being continuously in engagement with the drive and said transmission (10) connecting the deflection roller (9) to the drive (7) in an engageable and disengageable fashion, **characterized in that** the transmission (10) is a planetary gear mechanism arranged inside the hollow deflection roller (9), whose planetary annulus (14) of the planetary gears (12) is permanently connected to a hollow shaft (15) which coaxially engages around the drive shaft of the drive (7) centrally in the interior of the deflection roller (9) and is rotatably mounted (16) on said drive shaft.

2. Cross belt sorter according to Claim 1, **characterized in that** the transmission (10) can be shifted in a contactless fashion.

3. Cross belt sorter according to Claims 1 and 2, **characterized in that** the sun gear (13) of the planetary gear mechanism (10) is arranged on the drive shaft (7) which is coaxial to the deflection roller (9) and is connected to the drive, and the planetary gears (12) which are mounted in a non-driven planetary annulus (14) mesh, on the one hand, with the sun gear (13) and, on the other hand, with the ring gear (11) of the planetary gear mechanism (10) which is attached to the inner circumference of the deflection roller (9).

4. Cross belt sorter according to Claims 1 to 3, **characterized in that** the planetary annulus (14) of the planetary gears (12) can be temporarily locked, under control from outside the deflection roller (9).

5. Cross belt sorter according to one of Claims 1 to 4, **characterized in that** the hollow shaft (15) is provided with at least one permanent magnet (17) which is attached to its circumference and which is located in the effective range of an electromagnet (18) which is provided outside the deflection roller (9), and when the magnetic field is switched on said permanent magnet (17) causes the hollow shaft (15) to be secured to the planetary annulus (14) and brings about simultaneous rotation of the ring gear (11) with the deflection roller (9).

6. Cross belt sorter according to Claim 5, **characterized in that** the strength of the magnetic field can be varied.

7. Cross belt sorter according to one of Claims 1 to 6, **characterized in that** each of the two deflection rollers (9) is assigned a transmission (10) which can be driven in the respectively reversed rotational sense.

8. Method for driving a cross belt sorter having the characteristics of one of Claims 1 to 7, **characterized in that,** in order to load or unload the cross belt sorter, the drive shaft (7) which is in engagement with the drive and bears the sun gear (13) of the planetary gear mechanism, is temporarily connected via the planetary gears (12) and the hollow gear to the deflection roller, having been shifted from the outside, and as a result the cross belt is set in motion in the rotational direction of the deflection roller.

## Revendications

1. Dispositif de tri à bande transversale pour transporter et trier de la marchandise en colis, constitué d'une pluralité de wagonnets ( 1 ) pouvant être déplacés individuellement ou couplés en un train sur une voie de convoyeur sans fin, wagonnets qui sont munis de leur côté respectivement d'une courroie ( 8 ) transversale sans fin, tournant autour de galets ( 9 ) de renvoi et pouvant être entraînée transversalement à la direction de transport des wagonnets, courroie sur laquelle les objets peuvent être transportés en y étant posés et peuvent être chargés et/ou déchargés en des points fixés de chargement et/ou de déchargement, au moins un galet ( 9 ) de renvoi de la courroie transversale étant en correspondance à cet effet avec un entraînement dont la force d'entraînement provient du mouvement longitudinal du dispositif de tri à bande transversale, étant prévu à cet effet entre l'entraînement ( 7 ) de la courroie ( 8 ) transversale et le galet ( 9 ) de renvoi un engrenage ( 10 ) de transmission commutable, dont l'arbre d'entraînement est en prise permanente avec l'entraînement et qui relie le galet ( 9 ) de renvoi, d'une manière pouvant être enclenchée et déclenchée, à l'entraînement ( 7 ), **caractérisé en ce que**
l'engrenage ( 10 ) est un engrenage planétaire commutable disposé à l'intérieur du galet ( 9 ) de renvoi creux, dont la couronne ( 14 ) planétaire des roues ( 12 ) satellites est solidaire d'un arbre ( 15 ) creux, qui entoure coaxialement centralement à l'intérieur du galet ( 9 ) de renvoi l'arbre d'entraînement ( 7 ) et est monté tournant ( 16 ) sur celui-ci.

2. Dispositif de tri à bande transversale suivant la revendication 1,
**caractérisé en ce que** l'engrenage (10) peut être commuté sans contact.

3. Dispositif de tri à bande transversale suivant les revendications 1 et 2,
**caractérisé en ce que**
la roue ( 13 ) solaire de l'engrenage ( 10 ) planétaire est montée sur l'arbre ( 7 ) d'entraînement coaxial au galet ( 9 ) de renvoi et relié à l'entraînement, et les roues ( 12 ) satellites, montées dans une couronne ( 14 ) planétaire sans entraînement, engrènent d'une part avec la roue (13) solaire et d'autre part avec la roue ( 11 ) à denture intérieure de l'engrenage (10) planétaire, qui est fixée au pourtour intérieur du galet ( 9 ) de renvoi.

4. Dispositif de tri à bande transversale suivant les revendications 1 à 3,
**caractérisé en ce que**
la couronne ( 14 ) planétaire des roues ( 12 ) satellites est commandée temporairement de l'extérieur du galet ( 9 ) de renvoi.

5. Dispositif de tri à bande transversale suivant l'une des revendications 1 à 4,
**caractérisé en ce que**
l'arbre ( 15 ) creux est muni d'au moins un aimant ( 17 ) permanent, qui est fixé sur son pourtour, qui se trouve dans la zone d'action d'un électroaimant ( 18 ) prévu en-dehors du galet ( 9 ) de renvoi et qui fait que, lorsque le champ magnétique est appliqué, l'arbre ( 15 ) creux avec la couronne ( 14 ) planétaire est maintenu fixe et en même temps la roue ( 11 ) à denture intérieure tourne avec le galet ( 9 ) de renvoi.

6. Dispositif de tri à bande transversale suivant la revendication 5,
**caractérisé en ce que**
l'intensité du champ magnétique est variable.

7. Dispositif de tri à bande transversale suivant l'une des revendications 1 à 6,
**caractérisé en ce que**
à chacun des deux galets ( 9 ) de renvoi, est associé un engrenage ( 10 ), qui peut être entraîné dans le sens de rotation respectivement inverse.

8. Procédé pour entraîner un dispositif de tri à bande transversale ayant les caractéristiques de l'une des revendications 1 à 7,
**caractérisé en ce que**
pour charger ou décharger le dispositif de tri à bande transversale, on relie au galet de renvoi, de temps en temps, par les roues ( 12 ) satellites et la roue à denture intérieure, par une commutation de l'extérieur, l'arbre ( 7 ) d'entraînement, en prise avec l'entraînement et portant la roue (13) solaire de l'engrenage planétaire, et on met ainsi en mouvement la courroie transversale dans le sens de rotation du galet de renvoi.
